# EUROPÄISCHE PATENTSCHRIFT

(11) **EP 0 391 838 B1**
(45) Veröffentlichungstag und Bekanntmachung des Hinweises auf die Patenterteilung: **21.07.1993**
(21) Anmeldenummer: 90810127.2
(22) Anmeldetag: 21.02.1990
(51) Int. Cl.: G01N 27/28, G01N 27/416, G01N 27/38

(54) **Vorrichtung zur Erfassung chemischer Ausgleichsvorgänge in wässriger Lösung**
Arrangement for detecting chemical equalization processes in a hydrous solution
Dispositif pour détecter des processus d'équilibrage dans une solution aqueuse

(30) Priorität: 02.03.1989 CH 775/89
(43) Veröffentlichungstag der Anmeldung: 10.10.1990
(73) Patentinhaber: CIBA-GEIGY AG, 4002 Basel (CH)
(72) Erfinder: Schmidt, Wilhelm, Dr., D-7850 Lörrach (DE)

(56) Entgegenhaltungen:
- EP-A- 0 271 764
- EP-A- 0 372 121
- DE-A- 3 118 771
- DE-A- 3 525 401
- DE-U- 8 706 309
- Prospekt Nr. 777-1-D der Firma Ingold Messtechnik GmbH, Siemensstrasse 9, 6347 Steinbach,DE

## Beschreibung

Die Erfindung betrifft eine Vorrichtung zur Bestimmung elektrochemischer Werte in wässriger Lösung, insbesondere zur Bestimmung von pH-Werten und/oder Redoxpotentialen gemäss Oberbegriff des Patentanspruches 1.

Viele Reaktionen in der Chemie laufen in wässriger Lösung ab. Insbesondere in der industriellen Chemie ist es von enormer ökonomischer und ökologischer Bedeutung, die Reaktionsvorgänge, welche üblicherweise Gleichgewichtsvorgänge sind, messtechnisch zu erfassen. Zu diesem Zweck werden üblicherweise der pH-Wert und/oder das Redoxpotential in wässriger Lösung erfasst. So ermöglicht beispielsweise eine exakte Endpunkterkennung über die Erfassung des pH-Wertes und/oder des Redoxpotentials bei der Diazotierung von Aminen eine Titration im Betriebsansatz. Daraus erhält man Aufschluss über die effektiv nötigen Einsatzmengen von Reagenzien. Durch eine daraus resultierende auf das minimal erforderliche Mass optimierte Nitritzugabe können eine Entstehung von nitrosen Gasen und damit NOₓ-Emissionen weitgehend vermieden werden.

Die Erfassung des pH-Wertes bzw. des Redoxpotentials der Lösung erfolgt in der industriellen Chemie üblicherweise mit pH-Sonden bzw. Redoxsonden, welche durch im Reaktionskessel vorgesehene Oeffnungen in die Lösung eingebracht werden. Bei einer bekannten Vorrichtung wird eine gummierte Stahlsonde in den Reaktionskessel eingebracht, welche an ihrer Spitze bis zu drei Messelektroden aufnehmen kann. Derartige Stabsonden sind sehr unhandlich und schwer. Für den Austausch und die Eichung der Elektroden muss sie nach Lösen einer Verschraubung am Reaktorkessel mit einer Winde aus dem Kessel gehoben werden.

Andere leichtere Stabsonden können zwar nur eine Elektrode aufnehmen, sind dafür aber einfacher und rascher ein- und ausbaubar. Zum Austausch und zur Eichung der Elektrode müssen aber auch diese Stabsonden vom Reaktionskessel abgeschraubt werden. Ausserdem wirft die leichte Bauweise bei grösseren Baulängen Stabilitätsprobleme auf.

Im deutschen Gebrauchsmuster Nr. DE-U-87 06 309 ist eine Messsonde beschrieben, die permanent in den Reaktorkessel hineinragt. Die Kalibrierkammer ist nur über zusätzliche Verschlussdeckel gegenüber dem Kessel verschliessbar. Bei defektem Verschlussdeckelmechanismus ist keine Kalibrierung der Elektrode möglich geschweige denn ein sicherer Austausch der Elektrode gewährleistet.

In der DE-A-3,525,401 ist eine Sonde beschrieben, welche ein Ein- und Ausfahren der Elektrode in den Reaktorkessel erlaubt. Zum sicheren Austausch der Elektrode müssen jedoch zusätzliche Absperrorgane (Ventile) betätigt werden, was ein zusätzliches Sicherheitsrisiko bedeutet.

Die in der DE-A-3,118,771 und in der EP-A-271,764 beschriebenen Sonden ragen permanent in den Reaktorkessel. Zum Kalibrieren der Elektrode, bzw. zum Waschen derselben, wird pneumatisch eine Hülse über die Elektrode geschoben, um den Bereich, in dem sich die Elektrodenspitze befindet, abzuschliessen. Die derart gebildete Kalibrierkammer ist nur über zusätzliche Ventile gegenüber der Umgebung abgeschlossen. Darüber hinaus ist die Hülse nicht vollständig in den Sondenkörper einziehbar, so dass sich ein Totraum bildet, in dem sich Rückstände ablagern können. Dies stellt insbesondere bei Diazotierungsreaktionen mit vielfach explosiven Rückständen ein enormes Sicherheitsrisiko dar.

Eine wesentliche Verbesserung gegenüber den bekannten Stabsonden stellen z.B. die in den Prospekten Nr. 776-2-D-300.087 CB und Nr. 777-1-D der Firma Ingold Messtechnik GmbH, Siemensstrasse 9, D-6347 Steinbach/TS beschriebenen Wechselsonden dar. Diese Wechselsonden sind wesentlich kleiner als die vorhin beschriebenen Stabsonden und werden seitlich über dem Boden des Reaktorkessels montiert. Die in den beiden Werbeprospekten beschriebenen Wechselsonden umfassen jeweils einen im wesentlichen zylindrischen Sondenkörper mit einer Kalibrierkammer und mit einem in einer zentrischen axialen Bohrung des Sondenkörpers axial verschiebbaren Tauchrohr.Das Tauchrohr weist an seinem vorderen Ende einen Schutzzylinder auf, dessen an das Tauchrohr angrenzender Bereich korbartig durchbrochen ist. In das Tauchrohr ist eine Elektrode eingesetzt, deren Kopf im durchbrochenen Bereich angeordnet ist. Das Tauchrohor mit der Elektrode kann in den Reaktorkessel ein- und ausgefahren werden, auch während laufender Produktion. Dadurch ist die Voraussetzung zur automatischen Kalibrierung und zur automatischen Kontrolle der chemischen Reaktion gegeben. Zum Austausch der Elektrode wird diese einfach aus dem Tauchrohr entfernt und eine andere eingesetzt. Beim Ausfahren des Tauchrohres aus dem Reaktionskessel wird die Oeffnung im Tauchrohr zum Reaktorkessel mit einem auf der Sondenspitze angeordneten Schutzzylinder verschlossen. Die Dichtigkeit dieser Sonden ist jedoch nicht in allen Stellungen des Tauchrohres gegeben. Insbesondere beim Durchgang des Tauchrohres durch die Mittellage kann es kurzzeitig zum Ausstoss von Kesselflüssigkeit in nichtdichtende Bereiche der Sonde, wie z.B. in die Kalibrierkammer oder in Spülleitungen kommen. Vor allem bei Steuerluftausfall kann das pneumatisch betätigbare Tauchrohr eine undefinierbare Stellung zwischen eingefahrener und ausgefahrener Endstellung einnehmen, und Kesselflüssigkeit, welche sehr oft auch noch unter Druck steht, unkontrolliert entweichen. Bei Diazotierungsreaktionen ist ausserdem auch darauf zu achten, dass sich keine Rückstände in Toträumen der Sonde ablagern, da diese oft explosiv sind.

Es besteht daher die Aufgabe, eine Wechselsonde der vorstehend beschriebenen Art derart zu verbessern, dass vorstehend genannte Probleme beseitigt werden.

Die Lösung dieser Aufgabe erfolgt erfindungsgemäss durch eine Modifikation der bekannten Wechselsonde, wie sie im kennzeichnenden Teil des Patentanspruches 1 beschrieben ist. Bevorzugte Varianten sind Gegenstand der abhängigen Patentansprüche.

Im folgenden wird die Erfindung mit ihren ihr als erfindungswesentlich zugehörigen Einzelheiten anhand eines Ausführungsbeispiels näher erläutert. Es zeigen in schematischer Darstellung:
- Fig. 1: die Wechselsonde mit ausgefahrenem Tauchrohr in teilgeschnittener Ansicht,
- Fig. 2: die Wechselsonde mit eingezogenem Tauchrohr in teilgeschnittener Ansicht und
- Fig. 3-5: eine teilgeschnittene und vergrösserte Detailansicht der Wechselsonde mit drei Stellungen des Tauchrohres.

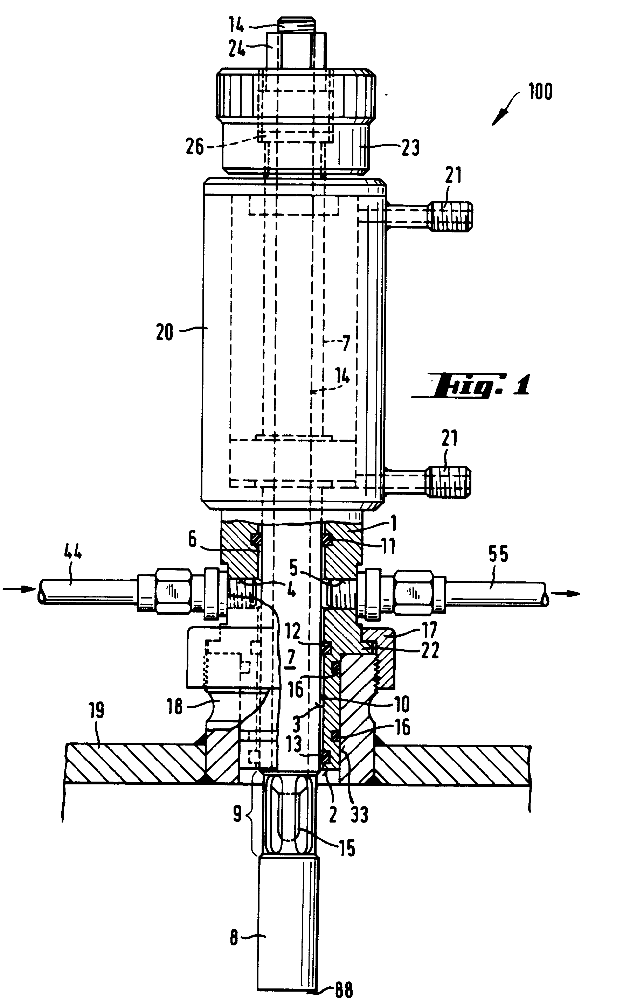

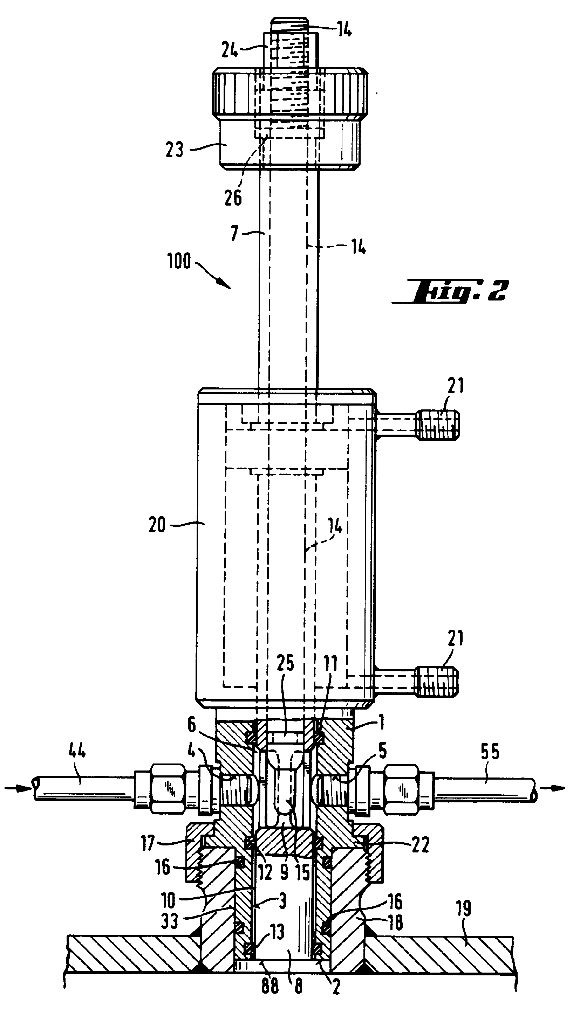

Die in den Fig. 1 und 2 dargestellte und im ganzen mit 100 bezeichnete Wechselsonde entspricht in ihrem prinzipiellen Aufbau im wesentlichen der im zuvor angeführten Prospekt Nr. 777-1-D der Firma Ingold beschriebenen. Deshalb beschränkt sich im folgenden die Beschreibung nur auf die erfindungswesentlichen Details. Die Wechselsonde 100 umfasst einen im wesentlichen zylindrischen Sondenkörper 1 mit einer zentrischen axialen Bohrung. Der Sondenkörper 1 ist mit mindestens je einer Zu- und Abfuhröffnung 4 und 5 ausgestattet, welche in eine Kalibrierkammer 6 am hinteren Ende des Sondenkörpers 1 münden. An den Zu- und Abfuhröffnungen 4 und 5 sind Zu- und Abfuhrleitungen 44 und 55 anschliessbar, beispielsweise einschraubbar. Ueber diese Zu- und Abfuhrleitungen 44 und 55 kann bei Bedarf Eich- oder Spülflüssigkeit in die Kalibrierkammer 6 eingebracht werden, bzw. wieder daraus entfernt werden. In der Bohrung des Sondenkörpers 1 ist ein Tauchrohr 7 axial verschiebbar angeordnet. Der Durchmesser des Tauchrohres 7 ist etwas kleiner gewählt als der Durchmesser der Bohrung des Sondenkörpers 1, so dass zwischen der Innenwandung 3 des Sondenkörpers 1 und dem Tauchrohr 7 ein Ringspalt 10 freibleibt, um eine störungsfreie Verschiebbarkeit des Tauchrohres 7 zu gewährleisten. oberhalb und unterhalb der Kalibrierkammer 6 ist der Ringspalt 10 mit einem ersten bzw. mit einem zweiten als O-Ring 11 bzw. 12 ausgebildeten Dichtungsring gegen Flüssigkeitsdurchtritt abgedichtet. Der erste und der zweite O-Ring 11 bzw. 12 sind in einem Abstand d₁ (Fig. 3) voneinander in die Innenwandung 3 des Sondenkörpers 1 eingelassen. Die Aussenwandung des Sondenkörpers 1 ist etwa auf Höhe des zweiten O-Ringes 12 mit einem Ringwulst 22 versehen, auf dem sich eine Ueberwurfmutter 17 abstützt. Mit dieser Ueberwurfmutter 17 ist der Sondenkörper 1 auf einen genormten Oeffnungsstutzen 18 eines chemischen Reaktorkessels 19 aufschraubbar, so dass sein vorderer Bereich in den Oeffnungsstutzen 18 hineinragt. Zur Abdichtung gegen Kesselflüssigkeit sind in die Aussenwandung 33 des vorderen Bereiches des Sondenkörpers 1 O-Ringe 16 eingelassen.

Vorzugsweise wird die Wechselsonde 100 auf Oeffnungsstutzen 18 bzw. seitliche Blockflausche im Bodenbereich des Reaktorkessels 19 aufgeschraubt. Derartige Wechselsonden (100) können aber auch auf Oeffnungsstutzen von Rohrleitungen aufgeschraubt werden, so dass das Tauchrohr 7 in die Rohrleitung einfahrbar ist.

Das Tauchrohr 7 ist an seinem vorderen Ende mit einem Schutzzylinder 8 versehen. Der direkt an das vordere Ende des Tauchrohres 7 anschliessende Bereich 9 des Schutzzylinders 8 ist korbartig durchbrochen ausgebildet. Ein Kopfteil 15 einer im Tauchrohr 7 angeordneten Elektrode 14 befindet sich genau innerhalb des korbartig durchbrochenen Bereiches 9 des Schutzzylinders 8. Die Abdichtung des Tauchrohres 7 gegen Kesselflüssigkeit erfolgt durch einen O-Ring 25 hinter dem Kopfteil 15 der Elektrode 14. Das hintere Ende des Tauchrohres 7 ist mit einem Schraubteil 23 verschliessbar. Das Schraubteil 23 ist mit einer Gewindeöffnung versehen, in welche eine Befestigungsmutter 24 samt der Elektrode 14 eingeschraubt ist. Durch einfaches Lösen der Befestigungsmutter 24 können unterschiedliche Elektroden 14 für pH-Wert-, Redoxpotentialmessungen oder andere, z.B. ionensensitive Messungen in das Tauchrohr 7 eingeführt werden. Ein O-Ring 26 ist so mit der Aussenwandung der Elektrode 14 verklebt, dass er zwischen dem Hinterende des Tauchrohres 7 und der Befestigungsmutter 24 einklemmbar ist. Auf diese Weise ist einerseits das Tauchrohr 7 gegen die Umgebung abgedichtet, andererseits kann die Elektrode 14 bei Elektrodenbruch nicht in den Reaktorkessel 19 fallen.

Vorzugsweise ist der Sondenkörper 1 mit einem Pneumatikzylinder 20 verbunden. In diesem Fall ist das Tauchrohr 7, welches in den Fig. 1 und 2 in seinen zwei Endstellungen dargestellt ist - zur Messung ausgefahren in Fig. 1 und eingezogen in Fig. 2 - zugleich als Pneumatikkolben ausgebildet. Ueber Steuerluftanschlüsse 21 wird Pressluft in den Pneumatikzylinder geleitet und dient zur Verschiebung des Tauchrohres 7.

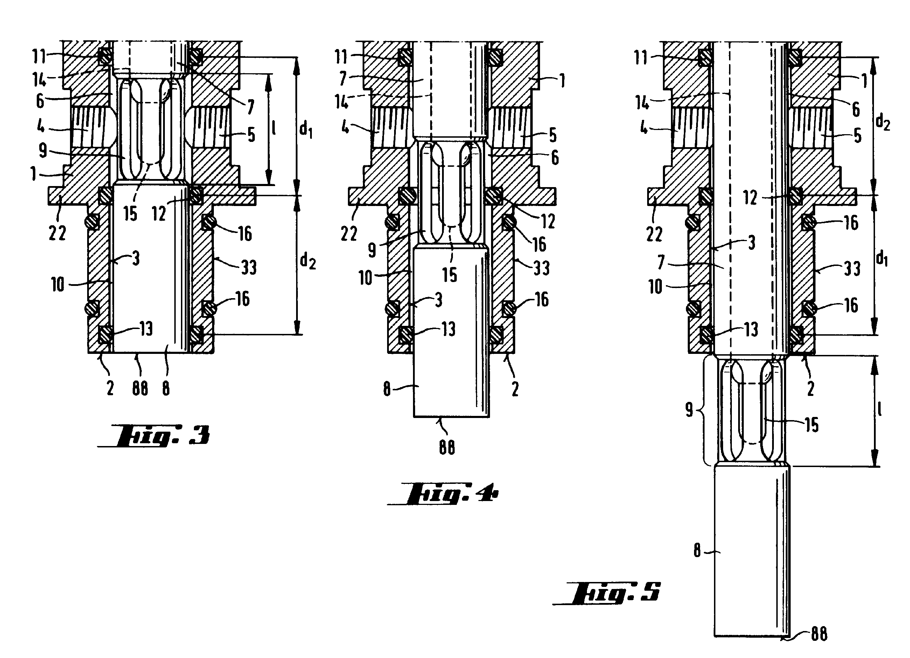

In den Fig. 3-5 ist der erfindungswesentliche Teil der Wechselsonde 100 vergrössert dargestellt. Aus Gründen einer besseren Uebersichtlichkeit wurde in den Fig. 3-5 auf die Darstellung der Ueberwurfmutter 17 verzichtet. In Fig. 3 ist das Tauchrohr 7 in eingezogener Endstellung, in Fig. 4 in einer Mittenstellung und in Fig. 5 in seiner ausgefahrenen Endstellung dargestellt. In den Fig. 3-5 ist im vordersten Bereich des Sondenkörpers 1 ein dritter als O-Ring 13 ausgebildeter Dichtungsring dargestellt, welcher im Abstand d₂ vom zweiten O-Ring 12 in seine Innenwandung 3 eingelassen ist. Zugleich ist der vordere, nicht durchbrochene Teil des Schutzzylinders 8 verlängert ausgebildet, so dass er in der eingezogenen Endstellung des Tauchrohres 7 sowohl am zweiten als auch am dritten O-Ring 12 bzw. 13 anliegt, also eine grössere Länge aufweist als der Abstand d₂ zwischen dem zweiten und dem dritten O-Ring 12 bzw. 13. Der korbartig durchbrochene Bereich 9 des Schutzzylinders 8 hingegen weist eine Länge l auf, die kleiner ist als die Abstände d₁ bzw. d₂ zwischen dem ersten O-Ring 11 und dem zweiten 12 bzw. zwischen dem zweiten O-Ring 12 und dem dritten 13. Auf diese Weise ist gewährleistet, dass auch in Mittelstellungen (Fig. 4) des Tauchrohres 7, beim Uebergang von einer Endstellung in die zweite, immer mindestens ein O-Ring den Ringspalt 10 zwischen der Innenwandung 3 des Sondenkörpers 1 und dem Tauchrohr 7 abdichtet. In einer besonders bevorzugten Ausführung ist zusätzlich zu dem dritten O-Ring 13 noch eine umlaufende Lippendichtung in die Innenwandung 3 des Sondenkörpers 1 eingelassen. Diese zusätzliche Lippendichtung kann vor oder hinter dem dritten O-Ring 13 angeordnet sein. Als Alternative kann anstelle des dritten O-Ringes 13 und der Lippendichtung auch eine Doppellippendichtung in der Innenwandung 3 des Sonderkörpers 1 vorgesehen sein, oder die vorderste dritte Dichteinrichtung als Stopfbuchse ausgebildet sein.

In bevorzugter Weise sind die Abstände d₁ und d₂ gleich gross. Die Länge des Schutzzylinders ist vorzugsweise so bemessen, dass in der eingezogenen Endstellung des Tauchrohres 7 das vordere Ende 88 des Schutzzylinders 8 bündig mit dem Vorderende 2 des Sondenkörpers 1 abschliesst. Auf diese Weise ist gewährleistet, dass sich keine Kesselflüssigkeit in Toträumen der Wechselsonde 100 ansammelt.

In der ausgezogenen Endstellung (Fig. 5) ragt der korbartig durchbrochene Bereich 9 des Schutzzylinders 8 über das Vorderende 2 des Sondenkörpers 1 hinaus und in die Kesselflüssigkeit hinein. In der eingezogenen Endstellung des Tauchrohres 7 (Fig. 3) befindet sich der durchbrochene Bereich 9 innerhalb der Kalibrierkammer 6, wo beispielsweise Reste von Kesselflüssigkeit vom Elektrodenkopf 15 weggespült werden können.

Bevorzugtes Material für die Ausbildung der Kalibrierkammer 6, des Tauchrohres 7 und des Schutzkorbes 8 ist Hastelloy C4. Die O-Ringe sind vorzugsweise aus Kalrez® gebildet. Die Elektrode 14 und der Elektrodenkopf 15 sind aus Glas. Vorzugsweise werden Elektroden der Firma Ingold verwendet, insbesondere Xerolyt®-Elektroden, welche in einem Firmenprospekt Nr. XER-1-D beschrieben sind. Andere Elektroden verwenden als Referenzmedium eine unter Druck stehende Elektrolytpaste. Wieder andere Elektroden sind derart ausgebildet, dass das Referenzmedium ausgetauscht bzw. nachgefüllt werden kann.

Durch die erfindungsgemässe Ausbildung der Wechselsonde 100 ist gewährleistet, dass in keiner Stellung des Tauchrohres 7 Kesselflüssigkeit durch nichtdichtende Bereiche der Sonde austreten kann. Auch bei unter Druck stehender Kesselflüssigkeit und bei Ausfall der Steuerluft bei pneumatisch betätigbaren Wechselsonden 100 ist volle Betriebssicherheit gegeben. Durch die besondere Wahl der Länge des Schutzzylinders 8 wird überdies vermieden, dass sich Reste von Kesselflüssigkeit in Toträumen der Sonde ansammeln, wodurch die Sicherheit noch weiter erhöht wird.

## Patentansprüche

1. Vorrichtung zur Bestimmung elektrochemischer Werte in wässriger Lösung, insbesondere zur Bestimmung von pH-Werten und/oder Redoxpotentialen, mit einem im wesentlichen zylindrischen Sondenkörper (1), der mindestens je eine Zu- und Abfuhröffnung (4, 5) für Eich-oder Spülflüssigkeit aufweist welche in eine Kalibrierkammer (6) am hinteren Ende des Sondenkörpers (1) münden, mit einem in einer zentrischen axialen Bohrung des Sondenkörpers (1) axial verschiebbaren Tauchrohr (7), welches an seinem vorderen Ende einen Schutzzylinder (8) aufweist und in welches eine Elektrode (14) eingesetzt ist, deren Kopf (15) innerhalb eines korbartig durchbrochenen Bereiches (9) des Schutzzylinders (8) angeordnet ist, dadurch gekennzeichnet, dass ein Ringspalt (10) zwischen dem Tauchrohr (7) und der Innenwandung (3) des Sondenkörpers (1) mit mindestens drei im Abstand (d₁, d₂) voneinander angeordneten und an der Innenwandung (3) des Sondenkörpers (1) angebrachten Dichtungsringen (11, 12, 13) abgedichtet ist, dass der Abstand (d₁ d₂) zwischen zwei jeweils benachbarten Dichtungsringen (11 und 12, bzw. 12 und 13) grösser bemessen ist, als die Länge (l) des durchbrochenen Bereiches (9) des Schutzzylinders (8), und dass der erste Dichtungsring (11) oberhalb der Kalibrierkammer (6) und der zweite und dritte Dichtungsring (12, 13) unterhalb der Kalibrierkammer (6) angeordnet sind.

2. Vorrichtung nach Patentanspruch 1, dadurch gekennzeichnet, dass das Tauchrohr (7) in seinen zwei Endstellungen arretierbar ist, wobei der durchbrochene Bereich (9) des Schutzzylinders (8) in der ausgefahrenen Endstellung über das vordere Ende (2) des Sondenkörpers (1) hinausragt und in der eingezogenen Endstellung innerhalb der Kalibrierkammer (6) angeordnet ist.

3. Vorrichtung nach Patentanspruch 2, dadurch gekennzeichnet, dass das vordere Ende (88) des Schutzzylinders (8) in der eingezogenen Endstellung des Tauchrohres (7) bündig mit dem vorderen Ende (2) des Sondenkörpers (1) abschliesst.

4. Vorrichtung nach einem der vorangehenden Patentansprüche, dadurch gekennzeichnet, dass der Abstand (d₁) zwischen dem ersten Dichtungsring (11) und dem zweiten Dichtungsring (12) und der Abstand (d₂) zwischen dem zweiten Dichtungsring (12) und dem dritten Dichtungsring (13) gleich gross sind.

5. Vorrichtung nach einem der vorangehenden Patentansprüche, dadurch gekennzeichnet dass das Tauchrohr (7), der Schutzzylinder (8) und die Kalibrierkammer (6) aus Hastelloy C4 gebildet sind.

6. Vorrichtung nach einem der vorangehenden Patentansprüche, dadurch gekennzeichnet, dass die Elektrode (14) und der Elektrodenkopf (15) aus Glas gebildet sind und dass die Elektrode (14) mit einem Referenzmedium, vorzugsweise einem Elektrolyt gefüllt ist.

7. Vorrichtung nach Patentanspruch 6, dadurch gekennzeichnet, dass das Referenzmedium durch eine unter Druck stehende Elektrolytpaste gebildet ist.

8. Vorrichtung nach Patentanspruch 6 oder 7 dadurch gekennzeichnet, dass das Referenzmedium austauschbar bzw. nachfüllbar ist.

9. Vorrichtung nach einem der vorangehenden Patentansprüche, dadurch gekennzeichnet, dass das Tauchrohr (7) pneumatisch verschiebbar ist.

10. Vorrichtung nach einem der vorangehenden Patentansprüche, dadurch gekennzeichnet, dass der Sondenkörper (1) mittels einer Ueberwurfmutter (17) auf einen genormten Oeffnungsstutzen (18) eines chemischen Reaktorkessels (19) oder einer Rohrleitung aufschraubbar ist, so dass das Tauchrohr (7) in den Reaktionskessel (19) bzw. in die Rohrleitung einfahrbar ist.

11. Vorrichtung nach einem der vorangehenden Patentansprüche, dadurch gekennzeichnet, dass die Dichtungsringe (11, 12, 13) als O-Ringe ausgebildet sind.

## Claims

1. An apparatus for the determination of electrochemical values in aqueous solutions, in particular for the determination of pH values and/or redox potentials, comprising an essentially cylindrical probe body (1), provided with at least one inlet and one outlet opening (4, 5) for calibrating or flushing liquid, which open into a calibrating chamber (6) at the rear end of the probe body (1), an immersion pipe (7) which is axially displaceable in a centric axial bore of the probe body (1) and includes at its front end a protective cylinder (8) and into which an electrode (14) is inserted, the head (15) of said electrode being located within a basket-like perforated area (9) of the protective cylinder (8), wherein an annular gap (10) between the immersion pipe (7) and the inner wall (3) of the probe body (1) is sealed by at least three spaced apart (d₁, d₂) sealing rings (11, 12, 13) fitted on the inner wall (3) of the probe body (1), the distance (d₁, d₂) between two adjacent sealing rings (11 and 12, and 12 and 13) is larger than the length (l) of the perforated area (9) of the protective cylinder (8), and the first sealing ring (11) is located above the calibrating chamber (6) and the second and third sealing rings (12, 13) are located under the calibrating chamber (6).

2. An apparatus according to patent claim 1, wherein the immersion pipe (7) may be locked in its two end positions, the perforated area (9) of the protective cylinder (8) projecting in an extended end position past the front end (2) of the probe body (1) and being located in a retracted end position within the calibrating chamber (6).

3. An apparatus according to patent claim 2, wherein, in the retracted end position of the immersion pipe (7), the front end (88) of the protective cylinder (8) is flush with the front end (2) of the probe body (1).

4. An apparatus according to any one of the preceding patent claims, wherein the distance (d₁) between the first sealing ring (11) and the second sealing ring (12) and the distance (d₂) between the second sealing ring (12) and the third sealing ring (13) are equal in length.

5. An apparatus according to any one of the preceding patent claims, wherein the immersion pipe (7), the protective cylinder (8) and the calibrating chamber (6) are made of Hastelloy C4.

6. An apparatus according to any one of the preceding patent claims, wherein the electrode (14) and the electrode head (15) are made of glass and the electrode (14) is filled with a reference medium, preferably an electrolyte.

7. An apparatus according to patent claim 6, wherein the reference medium consists of an electrolyte paste under pressure.

8. An apparatus according to patent claim 6 or patent claim 7, wherein the reference medium is exchangeable or refillable.

9. An apparatus according to any one of the preceding patent claims, wherein the immersion pipe (7) is displaceable by pneumatic means.

10. An apparatus according to any one of the preceding patent claims, wherein the probe body (1) may be screwed onto a standardised connection piece (18) of a chemical reactor vessel (19) or of a pipeline by means of a union nut (17), so that the immersion pipe (7) may be inserted into the reaction vessel (19) or into the pipeline.

11. An apparatus according to any one of the preceding patent claims, wherein the sealing rings (11, 12, 13) are in the form of O-rings.

## Revendications

1. Dispositif pour déterminer des valeurs électrochimiques dans une solution aqueuse, en particulier pour déterminer des valeurs de pH et/ou des potentiels d'oxydoréduction, comprenant un corps de sonde (1) essentiellement cylindrique, présentant au moins un orifice d'amenée et au moins un orifice d'évacuation (4, 5) pour un liquide d'étalonnage ou de lavage, qui débouchent dans une chambre d'étalonnage (6) à l'extrémité arrière du corps de sonde (1), de même qu'un tube plongeur (7) disposé axialement mobile dans un alésage axial central du corps de sonde (1), tube plongeur qui présente un cylindre protecteur (8) à son extrémité avant et dans lequel est disposée une électrode (14) dont la tête (15) est située à l'intérieur d'une zone (9) perforée à la façon d'un panier du cylindre protecteur (8), caractérisé en ce qu'une fente annulaire (10) entre le tube plongeur (7) et la paroi intérieure (3) du corps de sonde (1) est étanchée par un moins trois bagues d'étanchéité (11, 12, 13) placées à distance (d₁, d₂) l'une de l'autre sur la paroi intérieure (3) du corps de sonde (1), que la distance (d₁, d₂) entre chaque fois deux bagues d'étanchéité voisines (11 et 12 ou 12 et 13) est choisie plus grande que la longueur (l) de la zone perforée (9) du cylindre protecteur (8), et que la première bague d'étanchéité (11) est disposée au-dessus de la chambre d'étalonnage (6) et les deuxième et troisième bagues d'étanchéité (12, 13) sont placées au-dessous de la chambre de calibrage (6).

2. Dispositif selon la revendication 1, caractérisé en ce que le tube plongeur (7) est blocable à ses deux positions extrêmes, la zone perforée (9) du cylindre protecteur (8) dépassant de l'extrémité avant (2) du corps de sonde (1) à la position extrême d'extension et étant située à l'intérieur de la chambre d'étalonnage (6) à la position extrême de rétraction.

3. Dispositif selon la revendication 2, caractérisé en ce que l'extrémité avant (88) du cylindre protecteur (8) affleure l'extrémité avant (2) du corps de sonde (1) à la position extrême de rétraction du tube plongeur (7).

4. Dispositif selon une des revendications précédentes, caractérisé en ce que la distance (d₁) entre la première bague d'étanchéité (11) et la deuxième bague d'étanchéité (12) et la distance (d₂) entre la deuxième bague d'étanchéité (12) et la troisième bague d'étanchéité (13) sont d'égale grandeur.

5. Dispositif selon une des revendications précédentes, caractérisé en ce que le tube plongeur (7), le cylindre protecteur (8) et la chambre d'étalonnage (6) sont en "Hastelloy C4".

6. Dispositif selon une des revendications précédentes, caractérisé en ce que l'électrode (14) et la tête (15) de l'électrode sont en verre et que l'électrode (14) est remplie d'un fluide de référence, de préférence d'un électrolyte.

7. Dispositif selon la revendication 6, caractérisé en ce que le fluide de référence est formé par un électrolyte en pâte sous pression.

8. Dispositif selon la revendication 6 ou 7, caractérisé en ce que le fluide de référence est remplaçable ou que du fluide de référence peut être rajouté.

9. Dispositif selon une des revendications précédentes, caractérisé en ce que le tube plongeur (7) est déplaçable par voie pneumatique.

10. Dispositif selon une des revendications précédentes, caractérise en ce que le corps de sonde (1) peut être vissé au moyen d'un écrou d'accouplement (17) sur une tubulure (18) normalisée d'une cuve de réacteur chimique (19) ou d'une canalisation, de manière que le tube plongeur (7) puisse être engagé dans la cuve de réaction (19) ou dans la canalisation.

11. Dispositif selon une des revendications précédentes, caractérisé en ce que les bagues d'étanchéité (11, 12, 13) son formées par des joints toriques.
